# EUROPEAN PATENT SPECIFICATION

(11) **EP 1 238 404 B1**
(45) Date of publication and mention of the grant of the patent: **04.06.2003**
(21) Application number: 00993454.8
(22) Date of filing: 15.12.2000
(51) Int. Cl.: H01H 51/22

(54) **BATTERY CUT-OFF DEVICE AND METHOD**
BATTERIEAUSSCHALTER
DISPOSITIF ET PROCEDE DE COUPURE DE BATTERIE

(30) Priority: 15.12.1999 GB 9929680; 20.01.2000 US 488256
(43) Date of publication of application: 11.09.2002
(73) Proprietor: FIRST INERTIA SWITCH LIMITED, Farnborough, Hampshire GU14 0NZ (GB)
(72) Inventor: JOHNSON, Brian, Saitash, Cornwall PL12 4DR (GB); KING, Matthew, Basingstoke, Hampshire RG22 4HD (GB); PATTERSON, Adrian Thomas Campbell, Southampton, Godshill SP6 2JX (GB)
(74) Representative: Goddard, Frances Anna
(86) International application number: GB0004823
(87) International publication number: WO01045126

(56) References cited:
- EP-A- 0 857 603
- WO-A-90/05374
- WO-A-98/32144
- FR-A- 2 552 379
- US-A- 5 718 264

## Description

The present invention relates to a circuit-breaker device for cutting off a battery from an associated circuit and finds application in many fields in particular the automotive field.

US-A-5917162 discloses a circuit-breaker device for cutting off a battery. This device is based on a mechanical latching arrangement that is de-latched by actuation with a solenoid armature. In the primed or latched position. in which electrical contact is made, a cylindrical member has an upwards force acting thereon by a compression spring. However, the cylindrical member is inhibited from responding to this force with an upwards movement by the shoulders of an elongate plunger mounted within the member, which shoulders engage with balls that are prevented from moving radially inwardly by a head portion of the plunger. The circuit breaker action follows from independent upward actuation of the plunger by a solenoid armature which is arranged below the plunger. Energisation of the solenoid urges the plunger upwards. When the plunger is urged upwards by the armature, the head of the plunger moves above the balls. allowing the balls to move radially inwards which in turn. frees the cylindrical member for upwards movement. The cylindrical member then acts on a movable contact to move the same upwards and be separated from fixed contacts with which the same is normally positively engaged, thereby breaking the circuit. This electro-mechanical device has the advantage of requiring no electrical load in the normal, closed configuration of the device, so that no power is consumed in this configuration. By contrast, in older devices. for example, the devices of US-A-312985 and US-A-1643415, in which actuation also takes place with solenoid and armature arrangements, the solenoid coils represent an ever-present electrical load in the normal. closed configuration of the device, so that power is continuously consumed. Despite the advantage of no power consumption in the closed configuration. the device of US-A-5917162 has a considerable mechanical complexity. As a result, manufacturing costs are relatively high. It also has the disadvantage of requiring vertical mounting to allow the device to operate, since the device relies on gravity to move the balls. European Patent number 0 857 603 discloses a battery cut off device having a switch that is operated by a solenoid controlled electromechanical device.

It is therefore an aim of the present invention to provide a simplified and less expensive battery cut-off device which does not consume power in the normal, closed configuration.

Accordingly, the present invention provides a battery cut-off device according to claim 1.

Preferably, the device further comprises an armature which is coupled to the bridge contact and responsive to the magnetic field generated by the magnetic element.

Preferably, the device is configured such that the armature is spaced from the magnetic attraction unit when the bridge contact is in the closed position.

Preferably, the armature is resiliently coupled to the bridge contact.

Preferably, the device further comprises a carrier which supports the bridge contact.

Preferably, the contact separator includes an electrical element operable to generate a further magnetic field for counteracting the magnetic field of the magnetic element, thereby enabling the bridge contact to move to the open position.

The magnetic element is a magnetisable element which is magnetisable and de-magnetisable by the electrical element on the generation of magnetic fluxes of opposite polarity.

Preferably, the contact separator is operable in response to a trigger signal.

More preferably, the contact separator includes an external trigger contact for receiving an electrical trigger signal as the trigger signal.

More preferably, the contact separator includes a manually-actuatable switch, the actuation of which generates the trigger signal.

Preferably, the contact separator includes a biasing element for biasing the bridge contact away from the first and second contacts.

The use of a magnet to hold the moveable bridge contact in place has the advantage that no external electrical power is required or consumed in maintaining the battery cut-off device in the closed configuration, while simultaneously allowing a simple construction.

The present invention also provides a method of operating a battery cut-off device, comprising the steps of: holding a bridge contact in contact with first and second electrical contacts by a magnetic field; receiving a trigger signal; and altering the magnetic field in response to the trigger signal to cause the bridge contact to separate from the first and second contacts.

The magnetic field is generated by magnetising the magnetic element and altered by demagnetising the magnetic element.

Preferably, the bridge contact is separated from the first and second contacts by the action of a biasing element.

Preferred embodiments of the present invention will now be described hereinbelow by way of example only with reference to the accompanying drawings, in which:
Figure 1 illustrates an exploded perspective view of a battery cut-off device in accordance with a first embodiment of the present invention:
Figure 2 illustrates a schematic sectional view of the device of Figure 1:
Figure 3 illustrates a schematic sectional view of a battery cut-off device in accordance with a second embodiment of the present invention; and
Figure 4 illustrates a schematic sectional view of a battery cut-off device in accordance with a third embodiment of the present invention.

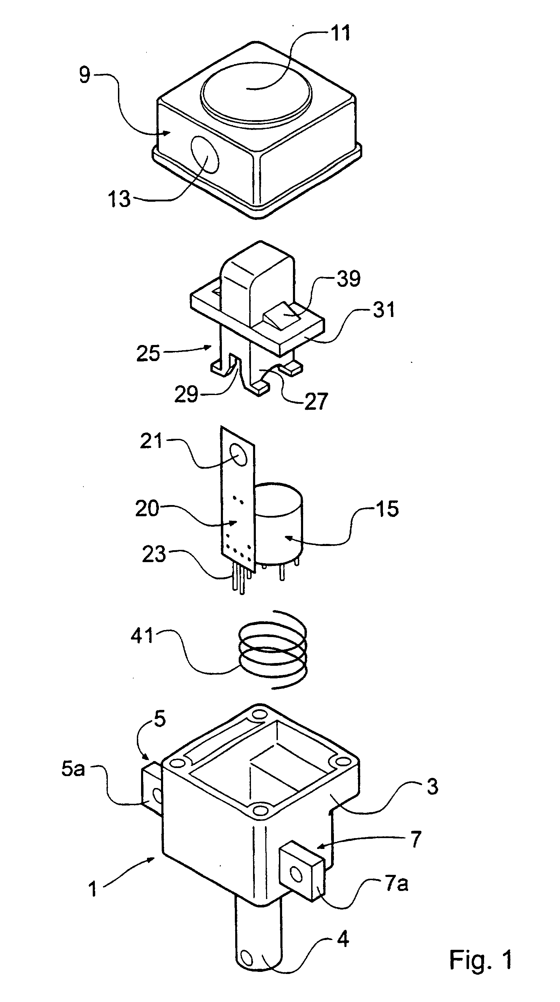

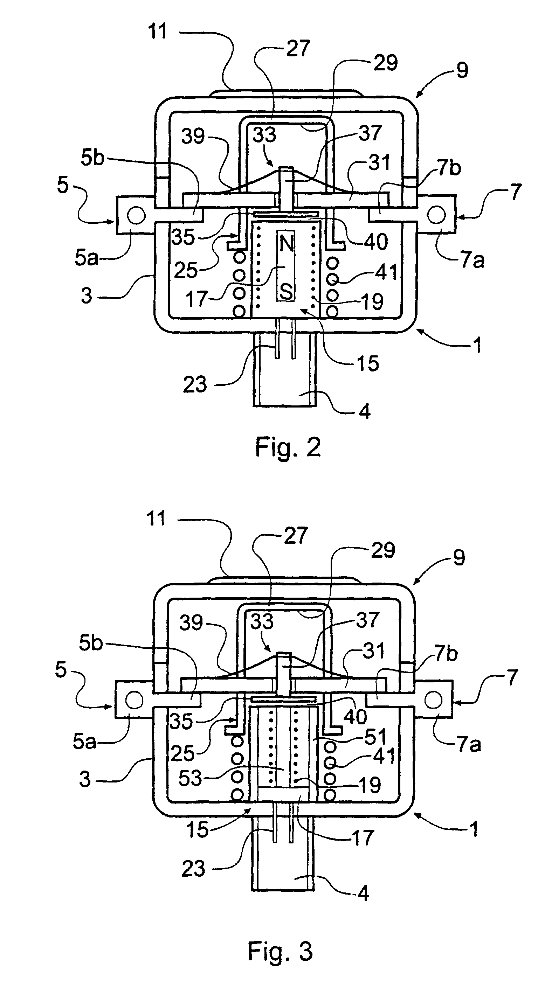

Figures 1 and 2 illustrate a battery cut-off device in accordance with a first embodiment of the present invention.

The device comprises a main body 1 which comprises a housing 3 for housing components of the device, a shroud 4 for an electrical connector which extends outwardly from the base portion of the housing 3, and first and second fixed contact lugs 5, 7 which extend through opposed sidewalls of the housing 3. Each of the contact lugs 5, 7 includes an external contact surface 5a, 7a for connection to external circuitry and an internal contact surface 5b, 7b. In this embodiment the housing 3 is formed of a plastics material, preferably by injection moulding.

The device further comprises a cover 9 for fitting, in this embodiment a snap fit. to the housing 3 and enclosing an internal cavity which is protected against the ingress of moisture and other foreign material. The cover 9 includes a first flexible membrane portion 11 in an upper surface thereof which provides a reset button, the function of which will be described in more detail hereinbelow. The cover 9 further includes a second flexible membrane portion 13 in a side surface thereof which provides a trip button, the function of which will be described in more detail hereinbelow.

The device further comprises a solenoid unit 15 which is fixedly disposed within the housing 3 to the base portion thereof and is operable to perform a latching function as will be described in more detail hereinbelow. The solenoid unit 15 comprises a magnet 17, in this embodiment a permanent magnet, and a solenoid coil 19 which is disposed thereabout and operable to generate a magnetic field which counteracts that of the magnet 17.

The device further comprises a printed circuit board (PCB) 20 which is disposed in the housing 3, in this embodiment adjacent the solenoid unit 15. The printed circuit board 20 includes control circuitry (not illustrated), a switch 21, in this embodiment a microswitch, at one end thereof, and external trigger contacts 23 which extend from the other end thereof for receiving an electrical trigger signal. The switch 21 is disposed adjacent to the second membrane portion 13 in the side surface of the cover 9 such as to be actuatable on depression of the second membrane portion 13. The external trigger contacts 23 are electrically connected to terminals of the connector in the shroud 4 of the main body 1. The circuitry of the printed circuit board 20 is configured such as to connect the coil 17 to power and earth on actuation of the switch 21 or receipt of the electrical trigger signal at the trigger contacts 23. In a vehicle, for example, the trigger contacts 23 could be connected to a separate crash module. The trigger contacts 23 could also be connected to any system which requires a battery to be disconnected, for example, on short-circuit detection or in response to a transit signal. For example, it is beneficial to disconnect the battery during shipment of a vehicle from the factory to a dealer.

The device further comprises a carrier assembly 25 which is movably disposed relative to the solenoid unit 15 between a closed, latched configuration and an open, released configuration.

The carrier assembly 25 includes a carrier 27 which includes a cavity 29 for receiving the solenoid unit 15, with the carrier 27 being freely movable over the solenoid unit 15.

The carrier assembly 25 further includes a bridge contact 31 which extends laterally therethrough, the opposed ends of which bridge contact 31, in the closed configuration, contact the contact surfaces 5b. 7b of the contact lugs 5, 7.

The carrier assembly 25 further includes an armature unit 33 which is resiliently disposed to the bridge contact 31. The armature unit 33 comprises an armature 35 which is disposed to the lower surface of the bridge contact 31 in opposed, spaced relation to the solenoid unit 15. a strut 37 which is connected to the upper surface of the armature 35 and extends through the bridge contact 31, and a resilient element 39. in this embodiment a blade spring, which resiliently supports the strut 37, and hence the armature 35, to the bridge contact 31. The function of the armature 35 is to provide an element which is responsive to the magnetic fields, permanent and transient, generated by the solenoid unit 15. In this embodiment the armature unit 33 is configured such that the armature 35 is spaced a small distance 40. in this embodiment about 2 mm, from the solenoid unit 15 when in the closed configuration and the bridge contact 31 is in contact with the contact surfaces 5b. 7b of the contact lugs 5, 7. In this way, the magnetic attraction of the armature 35 to the magnet 17 is such as to always maintain a positive force on the bridge contact 31 and thereby maintain a positive force between the bridge contact 31 and the contact surfaces 5b, 7b of the contact lugs 5, 7.

In an alternative embodiment the strut 37 can extend through the cover 9 and be manually actuated directly to reset the device.

In another alternative embodiment the armature 35 could be provided by a central portion of the bridge contact 31, in which embodiment the strut 37 and the resilient element 39 would be omitted.

The device further comprises a biasing element 41, in this embodiment a helical compression spring, disposed about the solenoid unit 15 between the base portion of the housing 3 and the carrier assembly 25 to bias the carrier assembly 25 away from the solenoid unit 15.

The operation of the device will now be described hereinbelow.

In the normal, closed or latched configuration, the bridge contact 31 is held against the contact surfaces 5a, 7a of the contact lugs 5, 7, allowing current to flow between the contact lugs 5, 7. The normally closed configuration is maintained by the action of the magnet 17 attracting the armature 35 in the carrier assembly 25. In this closed configuration the magnetic attraction force between the magnet 17 and the armature 35 exceeds the mechanical force generated by the biasing element 41 and thus acts to bias the carrier assembly 25 towards the solenoid unit 15.

The device is released from the closed configuration into a stable, open or released configuration by the energisation of the coil 19, either as a result of the application of an electrical trigger signal to the trigger contacts 23 or by manual actuation of the switch 21 through depression of the second flexible membrane portion 13 in the side surface of the cover 9. Energisation of the coil 19 generates a magnetic field which counteracts that of the magnet 17, resulting in the mechanical force of the biasing element 41 exceeding the combined net magnetic force of the permanent and transient magnetic fields, and the carrier assembly 25 being pushed upwards away from the solenoid unit 15 into the stable open configuration in which the bridge contact 31 is separated from the contact surfaces 5a, 7a of the contact lugs 5, 7. In this open configuration, the contact lugs 5, 7 are not electrically connected and the device is open circuit. The energising electrical impulse for energising the coil 19 need only be of short duration, since the magnetic attraction force oetween the magnet 17 and the armature 35 falls off rapidly as the mutual separation between those elements increases.

It will thus be apparent that no electrical power is consumed or required either when the device is in the closed configuration or the open configuration. Moreover, only a short electrical impulse is required to trip the device from the closed configuration to the open configuration.

Resetting from the open configuration is performed by manual depression of the flexible membrane 11 in the upper surface of the cover 9, which depression pushes the carrier assembly 25 downwards until the armature 35 is sufficiently attracted by the magnet 17 as to overcome the biasing force of the biasing element 41 and adopt the closed configuration.

In an alternative embodiment the device could include an electrical reset. In one such embodiment the solenoid unit 15 could include a second coil which is energised on receipt of an electrical reset signal and configured to generate an attractive magnetic force between the solenoid unit 15 and the armature 35 which is sufficient to draw the carrier assembly 25 back to the closed configuration from the open configuration.

In another embodiment a plurality of contact sets may be provided in a single device to allow switching of several circuits. These contact sets may be disposed alongside each other or piggy-backed with a non-conductive spacer disposed between adjacent bridge contacts.

In a further embodiment the circuitry on the printed circuit board 20 may include short circuit detection to energise the coil 19 and trip the device on detection of abnormal loads.

In a yet further embodiment the device may include a crash sensor to trigger the device instead of, or, in addition to, an external trigger signal. For example, an inertia switch may be incorporated in the device.

In a still yet further embodiment the circuitry on the printed circuit board 20 may incorporate a battery condition monitor to enable the device to be tripped, preferably selectively where an electrical reset is provided, to load the battery in such a way that battery life is prolonged during long storage periods.

In yet another embodiment the biasing element 41 could be a tension spring connected between the cover 9 and the carrier assembly 25.

In still yet another embodiment the biasing element 41 could be replaced by a mechanical latch for retaining the carrier assembly 25 in the open position. In this embodiment, the mechanical latch would latch onto the carrier assembly 25 when the carrier assembly 25 is moved under action of the coil 19.

Figure 3 illustrates a battery cut-off device in accordance with a second embodiment of the present invention.

This embodiment is quite similar to the embodiment of the above-described first embodiment, and thus, in order to avoid unnecessary duplication of description, only the differences will be described in detail. with like parts being designated by like reference signs.

This embodiment differs from the above-described first embodiment only in the construction of the solenoid unit 15. In this embodiment the solenoid unit 15 comprises a tubular, in this embodiment cylindrical, outer element 51, one, the upper, end of which faces the armature 35 and acts as one pole piece, an inner element 53, in this embodiment a rod, which is centrally located within the outer element 51 and one, the upper end, of which is in the same plane as the one end of the outer element 51 and acts as the other pole piece, a magnet 17, in this embodiment a circular disk and a permanent magnet, which is disposed to the other, lower, ends of the inner and outer elements 51, 53 so as to couple the same, and a solenoid coil 19 disposed about the inner element 53.

The operation of this device is the same as for the above-described first embodiment.

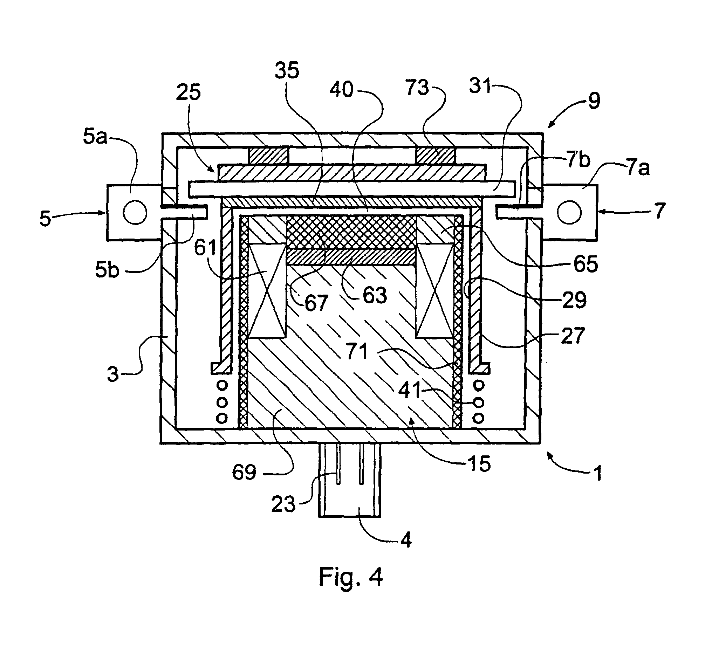

Figure 4 illustrates a battery cut-off device in accordance with a third embodiment of the present invention.

This embodiment has a basic structure similar to that of the above-described embodiments, and, in order to avoid unnecessary duplication of description, only the differences will be described in detail, with like parts being designated by like reference signs.

This embodiment differs from the above-described embodiments in the construction of both the solenoid unit 15, in this embodiment having the function of both releasing and resetting the device, and the carrier assembly 25.

The solenoid unit 15 comprises a solenoid coil 61, a magnetisable magnet 63, in this embodiment a circular disk of ferromagnetic material, which is disposed within the coil 61 and has a residual magnetism when magnetised. an annular element 65 which is disposed to one, the upper, end, of the coil 61 and defines a radially outer part of the operating face of the solenoid unit 15 and acts as one of the pole pieces, a spacer 67, in this embodiment a circular disk, which is disposed to one, the upper, face of the magnet 63 and defines a radially inner part of the operating face of the solenoid unit 15, a core 69 which is disposed to the other, lower, face of the magnet 63, and an outer tubular element 71, in this embodiment a cylindrical sleeve, which is disposed about the coil 19, the annular element 65 and the core 69 and acts as the other pole piece.

The carrier assembly 25 includes a carrier 27 which includes a cavity 29 for receiving the solenoid unit 15, with the carrier 27 being freely movable over the solenoid unit 15. The carrier assembly 25 further includes a bridge contact 31 which extends laterally through the carrier 27, the opposed ends of which bridge contact 31, in the closed configuration, contact the contact surfaces 5b, 7b of the contact lugs 5, 7. The carrier assembly 25 further includes an armature 35 which is disposed to the lower surface of the bridge contact 31 in opposed relation to the solenoid unit 15. The function of the armature 35 is similarly to provide an element which is responsive to the magnetic fields generated by the solenoid unit 15. Again, similarly to the above-described first embodiment, the carrier assembly 25 is configured such that the armature 35 is spaced a small distance 40, in this embodiment about 2 mm, from the solenoid unit 15 when in the closed configuration and the bridge contact 31 is in contact with the contact surfaces 5b, 7b of the contact lugs 5, 7.

The operation of the device will now be described hereinbelow.

In operation, energising the coil 61 shuttles the carrier assembly 25 between one of a first, closed position, in which the bridge contact 31 is in contact with the contact surfaces 5b, 7b of the contact lugs 5, 7 and current can flow therebetween, and a second, open position, as illustrated in Figure 4, in which the bridge contact 31 is spaced from the contact surfaces 5b, 7b of the contact lugs 5. 7 and current cannot flow therebetween. In the open position the upper surface of the carrier assembly 25 is in abutment with a spacer 73 provided to the cover 9.

When a voltage pulse of one polarity is applied to the trigger contacts 23, the coil 61 is energised and magnetises the magnet 63 with a magnetic flux of a first polarity which is such as to attract the armature 35. The magnetic field of the magnetised magnet 63 is such as to attract the armature 35, drawing the armature 35 and hence the bridge contact 31 theretowards. Once so magnetised, the magnet 63 retains the residual magnetisation after termination of the voltage pulse, thereby maintaining the bridge contact 31 in the closed position.

When a voltage pulse of the opposite polarity is applied to the trigger contacts 23, the coil 61 is energised and a magnetic flux of opposite polarity to that of the magnetised magnet 63 is generated, which magnetic flux is such as to de-magnetise the magnet 63. With no magnetic force to overcome, the mechanical force of the biasing element 41 then acts to push the carrier assembly 25 upwards away from the solenoid unit 15 into abutment with the spacer 73 on the cover 9, thereby lifting the bridge contact 31 away from the contact surfaces 5a, 7a on the contact lugs 5, 7.

In this embodiment, repeated manual actuation of the switch 21 toggles the device between the open and closed configurations.

For further details of solenoid units using residual magnetism, reference is made to US-A-5718264 which discloses prior art designs of solenoid-actuated fluid-flow control valves for automotive fuel injection systems.

The device of the above-described third embodiment can thus be positively actuated to shuttle between the open and closed configurations by application of voltage pulses of different polarity. As in the first and second embodiments, the device is held in either of the open or closed configurations under the action of a magnet and requires no electrical power in either of those configurations. Electrical power is only needed to trip and reset the device.

Finally, it will be understood that the present invention has been described in its preferred embodiments and can be modified in many different ways without departing form the scope of the claimed invention as defined by the appended claims.

## Claims

1. A battery cut-off device (1), comprising:
first (5) and second (7) electrical contacts;
a bridge contact (31) movable between a first, closed position in contact with the first (5) and second (7) contacts and a second, open position spaced from the first (5) and second (7) contacts, a magnetic attraction unit and a contact separator, **characterised in that**;
the magnetic attraction unit includes a magnetisable element (63) which has a residual magnetism when magnetised for providing a magnetic field sufficient to hold the bridge contact (31) in the closed position; and
the contact separator comprises a solenoid coil (61) operable to magnetise and demagnetise said magnetic element (63) on the generation of magnetic fluxes of opposing polarity.

2. A device according to Claim 1, wherein said magnetisable element (63) is disposed within said solenoid coil (61), said contact separator further comprising an annular element (65) disposed to one end of the coil (61) and to the upper face of the magnet (63) to act as one pole piece, a core (69) disposed to the lower face of the magnet (63) and an outer tubular element (71), disposed about the coil (61), the tubular element (71) and the core (69) providing the other pole piece.

3. A device according to claim 1 or 2, further comprising an armature (35) which is coupled to the bridge contact (31) and responsive to the magnetic field generated by the magnetisable element (63).

4. A device according to claim 1, 2 or 3, wherein the device is configured such that the armature (35) is spaced from the magnetic attraction unit when the bridge contact (31) is in the closed position.

5. A device according to anyone of claims 2, 3 or 4, wherein the armature (35) is resiliently coupled to the bridge contact (31).

6. A device according to anyone of claims 1 to 5, further comprising a carrier (25) which supports the bridge contact (31).

7. A device according to any of claims I to 6, wherein the solenoid coil (61) is operable in response to a trigger signal.

8. A device according to claim 7, wherein the battery cut-off device (1) includes an external trigger contact (23) for receiving an electrical trigger signal as the trigger signal.

9. A device according to claim 7 or 8, wherein the contact separator includes a manually-actuatable switch, the actuation of which generates the trigger signal.

10. A device according to any of claims 1 to 9, wherein the contact separator includes a biasing element (41) for biasing the bridge contact (31) away from the first (5) and second (7) contacts.

11. A method of operating a battery cut-off device, **characterised by** comprising the steps of:
(a) applying a first voltage pulse of one polarity to a trigger contact (23) to energise a solenoid coil (61) and magnetise a magnetisable element (63) by a flux of a first polarity, which magnetised element (63) is such as to attract an armature (35) and hold a bridge contact (31) in a closed position in contact with first (5) and second (7) electrical contacts;
(b) maintaining the bridge contact (31) in the closed position by means of the residual magnetism of the magnetisable element (63) after termination of the first voltage pulse;
(c) applying a second voltage pulse of opposite polarity to the trigger contact (23), thereby energising the solenoid coil (61) and generating a flux of opposite polarity to that of the magnetisable element (63) to demagnetise the magnetisable element (63) and thereby allow the bridge contact (21) to separate from the first (5) and second (7) contacts to an open position.

12. A method according to claim 11, wherein the bridge contact (31) is separated from the first (5) and second (7) contacts by the action of a biasing element (41).

## Patentansprüche

1. Batterieausschaltvorrichtung (1) mit:
ersten (5) und zweiten (7) elektrischen Kontakten;
einem Brückenkontakt (31), der zwischen einer ersten, geschlossenen Position in Kontakt mit den ersten (5) und zweiten (7) Kontakten und einer zweiten, offenen Position bewegbar ist, die von den ersten (5) und zweiten (7) Kontakten im Abstand angeordnet ist, einer magnetischen Anziehungseinheit und einem Kontakttrenner, **dadurch gekennzeichnet, daß**
die magnetische Anziehungseinheit ein magnetisierbares Element (63) aufweist, das einen Restmagnetismus hat, wenn es zur Schaffung eines magnetischen Feldes magnetisiert wird, welches ausreicht, den Brückenkontakt (31) in der geschlossenen Position zu halten; und
der Kontakttrenner eine Solenoidspule (61) aufweist, die betriebsbereit ist, das magnetische Element (63) auf das Erzeugen magnetischer Flüsse entgegengesetzter Polarität zu magnetisieren und zu entmagnetisieren.

2. Vorrichtung nach Anspruch 1, wobei das magnetisierbare Element (63) in der Solenoidspule (61) angeordnet ist, der Kontakttrenner ferner ein ringförmiges Element (65) aufweist, welches zu einem Ende der Spule (61) und zu der oberen Fläche des Magneten (63) angeordnet ist, um als ein Polstück zu wirken, wobei ein Kern (69) zu der unteren Fläche des Magneten (63) und ein äußeres rohrförmiges Element (71) angeordnet sind, welches um die Spule (61) herum angeordnet ist, wobei das rohrförmige Element (71) und der Kern (69) das andere Polstück schaffen.

3. Vorrichtung nach Anspruch 1 oder 2, ferner mit einem Anker (35), der an den Brückenkontakt (31) angekoppelt ist und auf das von dem magnetisierbaren Element (63) erzeugten magnetischen Feld anspricht.

4. Vorrichtung nach Anspruch 1, 2 oder 3, wobei die Vorrichtung derart gestaltet ist, daß der Anker (35) im Abstand von der magnetischen Anziehungseinheit angeordnet ist, wenn sich der Brückenkontakt (31) in der geschlossenen Position befindet.

5. Vorrichtung nach einem der Ansprüche 2, 3 oder 4, wobei der Anker (35) federnd elastisch an den Brückenkontakt (31) gekoppelt ist.

6. Vorrichtung nach einem der Ansprüche 1 bis 5, ferner mit einem Träger (25), welcher den Brückenkontakt (31) haltert.

7. Vorrichtung nach einem der Ansprüche 1 bis 6, wobei die Solenoidspule (61) betriebsbereit beim Ansprechen auf ein Triggersignal ist.

8. Vorrichtung nach Anspruch 7, wobei die Batterieausschaltvorrichtung (1) einen externen Triggerkontakt (23) aufweist für die Aufnahme eines elektrischen Triggersignals als des Triggersignals.

9. Vorrichtung nach Anspruch 7 oder 8, wobei der Kontakttrenner einen von Hand betätigbaren Schalter aufweist, dessen Betätigung das Triggersignal erzeugt.

10. Vorrichtung nach einem der Ansprüche 1 bis 9, wobei der Kontakttrenner ein Vorspannelement (41) aufweist zum Vorspannen des Brückenkontaktes (31) weg von den ersten (5) und zweiten (7) Kontakten.

11. Verfahren zum Betreiben einer Batterieausschaltvorrichtung, **gekennzeichnet durch** die folgenden Schritte:
a) Aufbringen eines ersten Spannungsimpulses einer Polarität auf einen Triggerkontakt (23) zur Erregung einer Solenoidspule (61) und Magnetisieren eines magnetisierbaren Elementes (63) **durch** einen Fluß einer ersten Polarität, wobei das magnetisierte Element (63) derart vorgesehen ist, daß es einen Anker (35) anzieht und einen Brükkenkontakt (31) in einer geschlossenen Position in Kontakt mit ersten (5) und zweiten (7) elektrischen Kontakten hält;
b) Halten des Brückenkontaktes (31) in der geschlossenen Position mittels des Restmagnetismus des magnetisierbaren Elementes (63) nach Beendigung des ersten Spannungsimpulses;
c) Aufbringen eines zweiten Spannungsimpulses entgegengesetzter Polarität auf den Triggerkontakt (23), **dadurch** Erregen der Solenoidspule (61) und Erzeugen eines Flusses entgegengesetzter Polarität zu dem des magnetisierbaren Elementes (63), um das magnetisierbare Element (63) zu entmagnetisieren und es **dadurch** dem Brückenkontakt (21) zu ermöglichen, sich aus den ersten (5) und zweiten (7) Kontakten zu einer offenen Position zu trennen.

12. Verfahren nach Anspruch 11, wobei der Brückenkontakt (31) von dem ersten (5) und zweiten (7) Kontakt durch die Tätigkeit eines Vorspannelementes (41) getrennt wird.

## Revendications

1. Dispositif (1) de coupure de batterie, comprenant
des premier (5) et second (7) contacts électriques ;
un contact coupe-circuit (31) mobile entre une première position fermée en contact avec les premier (5) et second (7) contacts et une seconde position ouverte espacée des premier (5) et second (7) contacts, un module d'attraction magnétique et un séparateur de contacts, **caractérisé en ce que** :
le module d'attraction magnétique inclut un élément magnétisable (63), qui a un magnétisme résiduel lorsqu'il est magnétisé, pour établir un champ magnétique suffisant à maintenir le contact coupe-circuit (31) dans la position fermée ; et
le séparateur de contacts comprend une bobine solénoïde (61) pouvant opérer pour magnétiser et démagnétiser ledit élément magnétique (63) lors de la production de flux magnétiques de polarités contraires.

2. Dispositif selon la revendication 1, dans lequel ledit élément magnétisable (63) est disposé à l'intérieur de ladite bobine solénoïde (61), ledit séparateur de contacts comprenant en outre un élément annulaire (65) disposé sur une extrémité de la bobine (61) et sur la face supérieure de l'aimant (63) pour servir de première pièce polaire, un noyau (69) disposé sur la face inférieure de l'aimant (63) et un élément tubulaire extérieur (71) disposé autour de la bobine (61), l'élément tubulaire (71) et le noyau (69) fournissant l'autre pièce polaire.

3. Dispositif selon la revendication 1 ou 2, comprenant en outre une armature (35) qui est couplée au contact coupe-circuit (31) et qui est sensible au champ magnétique produit par l'élément magnétisable (63).

4. Dispositif selon la revendication 1, 2 ou 3, dans lequel le dispositif est configuré de sorte que l'armature (35) est espacée du module d'attraction magnétique lorsque le contact coupe-circuit (31) est dans la position fermée.

5. Dispositif selon l'une quelconque des revendications 2, 3 ou 4, dans lequel l'armature (35) est couplée élastiquement au contact coupe-circuit (31).

6. Dispositif selon l'une quelconque des revendications 1 à 5, comprenant en outre un support (25) qui supporte le contact coupe-circuit (31).

7. Dispositif selon l'une quelconque des revendications 1 à 6, dans lequel la bobine solénoïde (61) peut fonctionner en réponse à un signal de déclenchement.

8. Dispositif selon la revendication 7, dans lequel le dispositif (1) de coupure de batterie inclut un contact extérieur (23) de déclenchement destiné à recevoir un signal électrique de déclenchement en tant que signal de déclenchement.

9. Dispositif selon la revendication 7 ou 8, dans lequel le séparateur de contacts inclut un commutateur pouvant être actionné manuellement, dans lequel la manoeuvre du commutateur engendre le signal de déclenchement.

10. Dispositif selon l'une quelconque des revendications 1 à 9, dans lequel le séparateur de contacts inclut un élément (41) de rappel destiné à rappeler le contact coupe-circuit (31) à l'écart des premier (5) et second (7) contacts.

11. Procédé de mise en oeuvre d'un dispositif de coupure de batterie, **caractérisé par le fait qu'**il comprend les étapes, dans lesquelles :
(a) on applique une première impulsion de tension d'une polarité à un contact (23) de déclenchement pour exciter une bobine solénoïde (61) et magnétiser un élément magnétisable (63) par un flux d'une première polarité, lequel élément magnétisé (63) est tel qu'il attire une armature (35) et maintient un contact coupe-circuit (31) dans une position fermée en contact avec les premier (5) et second (7) contacts électriques ;
(b) on maintient le contact coupe-circuit (31) dans la position fermée au moyen du magnétisme résiduel de l'élément magnétisable (63) à la fin de l'application de la première impulsion de tension ;
(c) on applique une seconde impulsion de tension de polarité contraire au contact (23) de déclenchement, en excitant ainsi la bobine solénoïde (61) et en engendrant un flux de polarité contraire à celle de l'élément magnétisable (63) pour démagnétiser l'élément magnétisable (63) et ainsi permettre la séparation du contact coupe-circuit (21) des premier (5) et second (7) contacts dans une position ouverte.

12. Procédé selon la revendication 11, dans lequel le contact coupe-circuit (31) est séparé des premier (5) et second (7) contacts par l'action d'un élément (41) de rappel.
